# EUROPEAN PATENT APPLICATION

(11) **EP 3 988 207 A1**
(43) Date of publication of application: **27.04.2022**
(21) Application number: 21187432.6
(22) Date of filing: 23.07.2021
(51) Int. Cl.: B01J 23/75, B01J 23/745, B01J 35/00, B01J 37/34, B82Y 30/00

(54) **SUPPORTED METAL STRUCTURE**

(30) Priority: 22.10.2020 US 202063104252 P
(71) Applicant: Bestrong International Limited, Wanchai (HK)
(72) Inventor: PETTERS, Stefan, Wien (AT); MAUTHNER, Klaus, Wien (AT)
(74) Representative: SONN Patentanwälte OG

(57) **Abstract**

The present invention relates to a method for producing a supported metal structure, wherein the support material having an at least lower density than its defined bulk density is mixed with metal precursor provided in a vapor phase and the such formed vapor - solid pre-compound is subjected to an immediate energy impact triggering the mounting of the metal moiety at once homogeneously over the entire solid support.

## Description

The present invention relates to a method for producing a supported metal structure, wherein a support material is mixed with metal precursor.

### State of the Art and Problem to be Solved

Supported metal structures are well known and utilized in heterogeneous catalysis. That means that catalysts differ from incoming reactants and products in its particular phase. Such structures commonly consist of a support-material, which is usually inert under intended reaction conditions, and a portion of metal deposited on said support. The preferred size of the metal portion ranges from the nanometer scale to only a few atoms forming a cluster, or to only one individual atom or molecule at its smallest extreme. Within such composite structure the metal portion provides for catalytic activity, which the neat individual metal portion cannot provide over longer time or even at all, as unsupported nanoparticles, clusters, molecules or atoms tend to fuse or coalesce to larger aggregates resulting in loss of catalytic activity under reaction conditions.

The term "metal portion" comprises both any single metal element, alloys, multi metallic systems, eutectic compositions, metal compounds, organometallics and mixtures thereof.

The term "support material" comprises any fine, powder like matter from zero-, one-, two- and three-dimensional shape ranging from nanometer to millimeter in size including thin endless fibers and yarns and porous high surface area materials. Typical support materials are commonly used are Al₂O₃, BN, SiO₂, MgO, CaO, zeolites, rare earth oxides, natural occurring minerals, polymers, graphitic carbons and modifications thereof.

Among the vast variety of materials explored thus far, carbon is unquestionably the most extensively studied support for heterogeneous catalysis as a whole. Generally, the advantages of carbon materials are derived from the following characteristics: surface resistance to both basic and acid media, thermal stability, tunable pore structure, multiple macroscopic shapes (granules, fibers, powder, etc.), controllable polarity, and hydrophilicity by modifying the chemical surface properties and cost effectiveness.

Synthesis of supported metal structures is commonly accomplished by incipient wetness impregnation, solvothermal synthesis, coprecipitation and thermolysis. All these methods require several operation steps starting with combining the components in a liquid phase followed by an adequate mixing period. Subsequently the solid supported metal structure has to be separated from the liquid, dried or calcinated. In thermolysis, which is basically some sort of calcination, the solid components are dry mixed and then heated under a specific atmosphere to fix the metal onto the support material. Costs of wet chemical processes suffer from rising environmental standards, requesting investments in purification and/or recycling of solvents. Subsequent drying and calcinations of the obtained wet powder-cakes usually leads to baking and re-agglomeration of the supported catalyst powders. However, this in turn requires an additional grinding or milling process-step.

Decoration of support materials with low chemical affinity or reactivity towards the intended metal-precursor commonly show very coarse metallic particle distribution and surface adhesion, when produced by wet chemical processes. In this case the non soluble support material is separated from the metal-precursor containing solution by filtration or centrifugation. Thus, however, the support material is left with a thin adhering metal containing liquid film. Upon drying or solvent evaporation the liquid film shrinks along the support material surface forming small droplets containing still dissolved metal precursor. These droplets even can aggregate to larger ones within the voids between the support material particles. Continuing solvent evaporation results in high metal precursor concentration making the metal precursor to form crystals due to super saturation within the droplets. Such crystals usually do not adhere well to the support material surface and are often left loose within the voids of the support material powder. In this context it is now clear, that a uniform or narrow particle size distribution on the support material is difficult to achieve.

For pretreated or coated support materials the issue of metal precursor or metal particle size distribution is of course different and more likely to control, but requires additional chemicals for coating and or pretreatment procedures.

Heterogeneous catalysis is a wide field in chemistry and highly specific towards reactions to be carried out. Both building up substances from smaller molecules and cracking down large molecules into small ones are common processes in chemical industry, among them catalytic cracking in oil refining, steam reforming, Methane and natural gas cracking, ammonia synthesis, Fischer-Tropsch synthesis, hydrogenation and dehydrogenation reactions and many more applications.

Hydrogen production from Hydrocarbons, in particular Methane, was reported by Pohlenz (US 3284161) and Hoekstra (US 3216801) both utilizing metals or metal oxides of group VIII of the periodic table of the elements combined by wet chemical procedures onto Alumina, Alumina-Silica, Silica, Magnesia, Zirconia, Titanium oxide, etc.. Recovery of the catalysts was accomplished in a separate reactor and the formed Carbon was burned off in air.

US 8034321 reveals the production of Hydrogen from Methane by means of group VIII transition metal - alkaline earth metal oxide composite catalysts. Neat Carbon product was obtained after wet chemical purification.

Moy (US 8470284) reports on catalysts for producing CNTs. The compositions of those catalysts are comparable to those suggested By Pohlenz and Hoeckstra and accomplished by precipitation of metal salts onto support materials from aqueous solution.

US 738668 discloses the making of Ni or Co composite catalysts for the synthesis of Carbon Nanofibers where the metal moiety is placed on predefined areas of the support material followed by a thermal activation step.

Moy (US 7923403) and Ma (US 7968489) disclose the use of functionalized CNTs as catalyst supports comprising the steps of i) activation by generating Carboxyl-groups on the CNT Substrate surface, ii) introduction of Amine linking moieties and iii) precipitating active metal thereon. All these steps are accomplished in liquid media.

Hong (US 6759025) describes growth of CNTs on catalysts placed on supports by coating or precipitation on substrate upon microwave impact. Similar to this is, however, my patent (US 7033650) describing microwave induced CNT growth on a substrate in a cold wall reactor.

The patent to Callighan (US 4003850) reveals the preparation of iron oxide catalysts by passing iron pentacarbonyl in an inert carrier gas over activated support materials, among them silica, alumina and carbon. Iron oxide is formed by admitting oxidizing gas to the support while maintaining the temperature below 100°C to oxidize the adsorbed iron carbonyl.

Basically, CVD allows direct deposition of the active material onto catalyst supports, however, under low pressure conditions, which means that the amount of active material available is rather low. In particular when fine powders are used as the substrate, diffusion of the active metal moiety into the bulk powder is limited or even hindered at all resulting in insufficient and/or uneven decoration of the entire amount of support powders.

The mounting of metal precursors onto support materials is either accomplished by a chemical reaction between the precursor and active sites on the support, or temperature induced decomposition of the precursor onto the support. However, for large scale production of supported catalysts fulfilling the criteria of homogeneous deposition and defined size of the deposited metal particle is in view of precursor life time, diffusion and energy input not to achieve.

### Description of the invention:

It is now an object of the present invention to provide a method for producing a supported catalyst structure enabling to synthesize a hydrogen-containing gas mixture from a suitable hydrocarbon-containing feed gas in a reformer, wherein, on the one hand, formation of an as pure as possible hydrogen with a low CO₂ portion or syngas with defined CO and H₂ ratio and, on the other hand, a cost-effective method for producing nanocarbon becomes possible.

Prerequisite for such supported catalysts are i) good availability of base materials and chemicals, ii) low costs of precursor materials, iii) feasible continuous processing, iv) no need for any further or prior activation process step and v) the possibility to recover the catalyst constituents with chemicals readily available at such production site.

According to the invention, this objective is achieved in that support materials having an at least lower density than its defined bulk density is mixed with metal precursors provided in a vapor phase and the such formed vapor - solid pre-compound is subjected to an immediate energy impact triggering the mounting of the metal moiety at once homogeneously over the entire surface of the support materials.

The term "support material" comprises any fine, powder like matter from zero-, one-, two- and three-dimensional shape ranging from nanometer to millimeter in size including thin endless fibers and yarns and porous high surface area materials. Typical support materials are commonly used are Al₂O₃, BN, SiO₂, MgO, CaO, zeolites, rare earth oxides, natural occurring minerals, polymers, graphitic carbons and modifications thereof.

In another embodiment according to the invention, the support material is subjected to heavy agitation, which means mechanical energy input, by means of e.g. high speed rotor blades, cutting knives etc. rendering the support material in a status of lower density than its defined bulk density. Depending on the type of support material the decrease of bulk density can result in volume gains of up to 1000%. A ten fold volume gain can be accomplished e.g. with carbon nano-materials and graphite as these materials easily electrostatically charge up and additionally deagglomerate upon milling or shredding. For Al₂O₃, having a density of 3,95 g/cm³ compared to Graphite with a value of 2,1 g/cm³, we only found a doubling of the volume for commercially available Alumina powders. Typical volume gains for Carbon nano-materials and Graphite are, depending on the energy input, between 100% and 500%.

The input of mechanical energy to the support powders, which is within the scope of the invention, is accomplished with high speed mixers or according to the invention modified and adapted shredder devices. Such devices commonly work with rotation speeds from several hundred rpm up to 15000 rpm. Our findings showed that at least 2000 rpm up to 10000 rpm are desirable to achieve effective volume gains, which means the generation of free space between the individual particles, which in turn accommodates the introduced metal precursor containing vapor phase, for the support powders.

Very high volume gains are accomplished with support materials, which are prone to electrostatically charge up by agitation. This effect is highly pronounced for carbon materials, among them Graphite, exfoliated Graphite, expanded Graphite, Carbon Black, Carbon Nanotubes and Carbon Nanofibers, which are within the preferred embodiments of this invention. Moreover in-situ thermal expansion of intercalated Graphite is also within the inventions scope.

The term "metal portion" comprises both any single metal element, alloys, multi metallic systems, eutectic compositions, metal compounds, organometallics and mixtures thereof.

According to a further embodiment of the invention, vapor-phase metal precursor for the vapor-solid pre-compound is provided by either utilizing metal precursors forming a vapor phase under defined conditions and can be introduced to the compounding step directly, or metal precursor containing solutions, which are admitted by means of an aerosol generator.

Among metal precursors forming a vapor phase there are Halides, Oxo-halides, Alkoxides, Metallocenes, Hydrides, Carbonyles and Organometallics with mixed ligand set-ups. Liquid metal precursors, such as Fe(CO)₅, for example, can even dissolve other Carbonyles or Organometallics, such as e.g. Mo(CO)₆, allowing the formation of mixed metal depositions onto the support material.

Admitting the metal moieties by means of an aerosol generator both Organometallics and conventional metal salts can be applied preparing relevant single or mixed metal precursor solutions. Among applicable solvents, there are no restrictions except chemical incompatibility towards the, or one of the metal precursor components.

In order to achieve a stable support material - metal precursor vapor-compound, it can be advantageous to provide the support material preheated at a temperature at least slightly below the decomposition temperature of the metal precursor.

Precise control about the amount of metal to be mounted onto the support material can be achieved by using an appropriate amount of inert carrier gas to admit the metal precursor vapor to the support material.

The final mounting of metal onto the support material is accomplished by immediate energy impact into the metal vapor - support material - compound. This can be accomplished either through rapid heating up to a temperature above the decomposition temperature of the metal precursor or microwave impact. Microwave impact heats immediately supports which are electrically conductive. However, when non conductive supports are utilized microwaves are known to interact with the vaporized metal precursor. In particular Organometallics are prone to expel one or more ligands upon radiation excitement leaving the metal atom highly reactive in an electron deficient state (e.g. 16 electron intermediate). Such activated metal complexes offer extremely high reactivity and therefore easily bind immediately to even neutral support surfaces.

Compared to thermal treatment of incipient wetness impregnated metal precursor support material compositions, rapid CVD or PVD induced metal precursor decomposition by means of microwave renders discrete, individual metal portions, which are substantially round shaped, in narrow particle size distribution, which also within the scope of the invention.

Moreover, this technique allows uniform deposition of round shaped metal portions with defined and uniform particle size distributions on even chemically neutral, highly curved surfaces like carbon nanofibers, carbon nanotubes and carbon black, respectively.

To give a figure example for the term uniform particle size distribution we claim at least 35% of all particles deposited being within 30 nm and 50 nm range, which represents the most preferred range, whereupon the full range of all particles is 1nm to 150 nm. However, it shall be understood, that the particle size distribution is depending on both the specific surface area of the support material and the concentration of metal precursor in the vapor phase. That means a high surface area of 200 m²/g and low metal precursor concentration of 0,001 mol/L in the vapor phase will result in an entire particle size range from 1 nm to 45 nm and at least 35% of the particles are found in the 3 nm to 10 nm range.

Another advantage of microwave assisted metal precursor CVD (Chemical Vapor Deposition) or PVD (Physical Vapor Deposition) is, in case of quartz or certain ceramics are utilized as reactor vessel materials, no metal precursor loss due to deposition on the reactor wall will occur, as these materials do not heat up upon direct microwave impact. This we refer as cold wall reactor principle and is claimed within the scope of the invention.

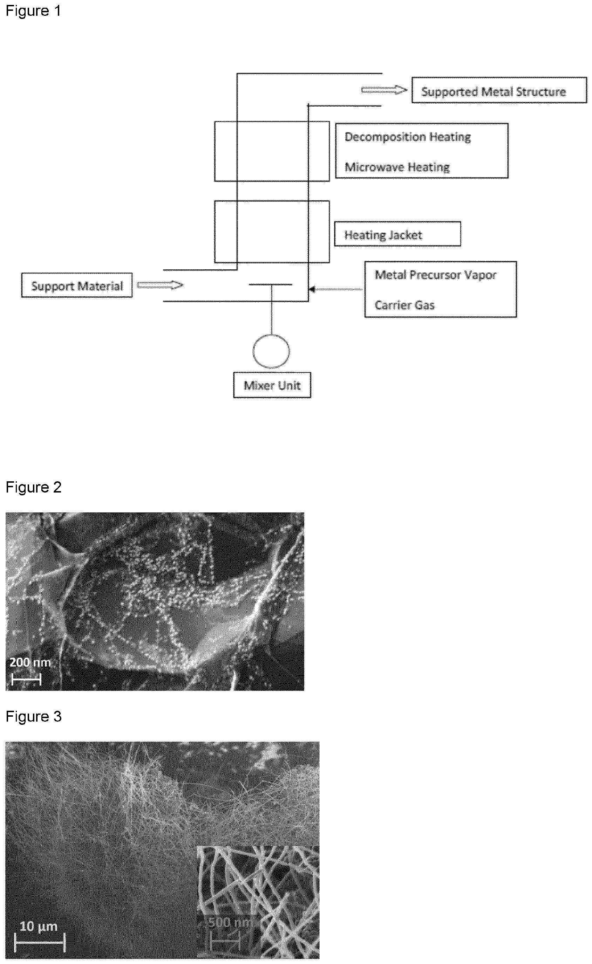

The reactor configuration for the process claimed by this invention is shown in Figure 1. It consists of a vertically aligned tube having an inlet for support material feed in at the bottom followed by a preheating zone and a heating zone for decomposition of the metal precursor. On top of the tube, there is a filter unit allowing gas and vapors from the decomposition step to escape to an incinerator and an outlet for the produced supported metal structure. Through the bottom plate the high speed mixing rotor is introduced and there is also an inlet port for the metal precursor vapor. The bottom area, where mixing takes place, additionally can be equipped with flow breakers and/or bulging sheets in order to maximize debulking and mixing effects. So it is an objective of the invention to present a process configuration providing for safe and effective continuous production of supported metal structures.

### Example 1

A glass cylinder, 5 cm in diameter and 20 cm high, with a high speed rotor and vapor inlet at the bottom, was loaded with 50 cm³ expanded Graphite. The cylinder was purged with Nitrogen and then the top was closed with a clamped lid providing a filter and an exhaust pipe directed to an incinerator. The cylinder was heated by means of a heating jacket to 100°C and this temperature was maintained during the mixing process. As mixing was started, at the same time 200 cm³ of Fe(CO)₅ vapor was admitted through the bottom orifice to the cylinder and the expanded Graphite was compounded with the Iron Carbonyl vapor for 2 minutes. During the mixing the volume of graphite powder grew to about 250 cm³. After the compounding step the heating jacket was exchanged to a microwave generator and the vapor-solid compound was flash-heated to 270°C, whereupon immediate decomposition of the Iron Carbonyl took place. Combustion analysis revealed a metal content on the graphite to be 8,75 %wt. SEM imaging shows discrete, round shaped Iron particulates attached to the graphite surface (Figure 2).

### Example 2

102 mg of supported metal structure from example 1 was loaded in a ceramic boat and placed in vertical tube reactor. The work-tube was made of quartz with 45 mm in diameter and 1000 mm in length. The reactor was brought under Nitrogen atmosphere and the heated to 850°C. Then the Nitrogen purge was stopped and a flow of 50 mL CH₄ was passed over the Iron-Graphite catalyst for 40 minutes. After the reaction the system was purged with Nitrogen and cooled down to room temperature. The total mass taken out of the reactor amounted to 457 mg. So the total mass gain was 350%. SEM imaging of the product revealed, that the carbon grown on the Iron particles was Carbon Nanofibers, as shown in Figure 3.

## Claims

1. A method of producing a supported metal structure, **characterized in that** the method comprises the step of mixing support materials with metal precursors, wherein the support materials before the mixing have a lower density than its defined bulk density, and the metal precursors are in vapor phase, thereby producing the such formed vapor - solid pre-compounds and subjecting the vapor - solid pre-compounds to an immediate energy impact to trigger the mounting of the metal moiety of the metal precursors at once homogeneously over the entire surface of the support materials.

2. A method according to claim 1, **characterized in that** the method comprises the step of subjecting the support materials to heavy agitation, preferably by means of high speed rotor blades and/or cutting knives, thereby rendering the support materials in a status having a density lower than its defined bulk density, resulting in a volume of the support materials of up to 1000% of its bulk volume.

3. A method according to claim 1 and 2, **characterized in that** the support materials are selected from the group comprising carbon materials, including Graphite, intercalated Graphite, exfoliated Graphite, expanded Graphite, Carbon Black, Carbon Nanotubes and Carbon Nanofibers.

4. A method according to claim 1, **characterized in that** the method comprises the step of selecting the metal precursors forming the vapor phase from the group consisting of metal salts, Halide-Complexes, Oxo-Halide-Complexes, Alkoxides, Metallocenes, Hydrides, Carbonyles, and Organometallics with mixed ligand set-ups.

5. A method according to claim 4, **characterized in that** the metal precursors are liquid metal precursors, preferably Fe(CO)s or Ni(CO)₄, and that the liquid metal precursors are admitted to the support materials by a stream of inert carrier gas.

6. A method according to claim 4 or 5, **characterized in that** the liquid metal precursors can dissolve other Carbonyles or Organometallics, preferably the Carbonyls of Mo, V and Mn, allowing the deposition of the mixed metal precursors onto the support material.

7. A method according to claim 4, **characterized in that** the method comprises the step of providing the metal precursors or a mixture of the metal precursors in solution and admitting the support materials by means of an aerosol generator to said solution.

8. A method according to claim 1,2 and 7, **characterized in that** the method comprises the step of preheating the support materials at a temperature at least slightly below the decomposition temperature of the metal precursors.

9. A method according to claim 1, **characterized in that** the method comprises the step of using the immediate energy impact to accomplish the final mounting of the metal moiety of the metal precursors onto the support materials, thereby forming the metal vapor - support material - compound.

10. A method according to claim 9, **characterized in that** the method comprises the step of selecting microwave radiation being the source of the immediate energy impact.

11. A method according to claims 1 and 9, **characterized in that** the method comprises the step of inducing decomposition of the metal precursors with rapid CVD or PVD, thereby providing discrete, individual metal portions of the metal precursors on the support materials, which are in substantially round shaped and within a narrow particle size distribution.

12. A method according to claim 1 and 10, **characterized in that** the method comprises the step of providing a reactor vessel made from quartz or microwave transmitting ceramics to avoid loss of the metal precursors, wherein no metal precursor deposits on the wall of the reactor vessel.

13. A method according to claim 1, **characterized in that** the method further comprises the steps of providing the support materials into a reactor; increasing the volume of the support materials by vigorous agitation; admission of the vapor phase of the metal precursors under vigorous agitation; and subsequently carrying out the final mounting of the metal moiety of the metal precursors onto the support materials by the immediate energy impact in one specific self contained reactor in a batch mode.

14. A method according to claim 1, **characterized in that** the method further comprises the steps of providing the support materials into a reactor; increasing the volume of the support materials by vigorous agitation; admission of the vapor phase of the metal precursors under vigorous agitation; and subsequently carrying out the final mounting of the metal moiety of the metal precursors onto the support materials by the immediate energy impact in a vertically aligned tube reactor providing individual zone for each process step where constant material input is provided at the bottom of the reactor and constant material output takes place at the top of the reactor.

15. Supported metal structure produced by a method according to any of the foregoing claims, **characterized in that** said supported metal structure reveals effective catalytic activity to synthesize hydrogen-containing gas from a suitable hydrocarbon-containing feed gas in a reformer, wherein, on the one hand, formation of an as pure as possible hydrogen with a low CO₂ portion or syngas with defined CO and H₂ ratio and, on the other hand, a cost-effective method for producing nanocarbon becomes possible.
